# NEUE EUROPÄISCHE PATENTSCHRIFT

(11) **EP 1 076 615 B2**
(45) Veröffentlichungstag und Bekanntmachung des Hinweises auf die Entscheidung über den Einspruch: **06.09.2006**
(45) Hinweis auf die Patenterteilung: 10.09.2003
(21) Anmeldenummer: 00920457.9
(22) Anmeldetag: 01.03.2000
(51) Int. Cl.: B60K 37/06

(54) **BEDIENVORRICHTUNG**
CONTROL DEVICE
DISPOSITIF DE COMMANDE

(30) Priorität: 08.03.1999 DE 19910240
(43) Veröffentlichungstag der Anmeldung: 21.02.2001
(73) Patentinhaber: SIEMENS AKTIENGESELLSCHAFT, 80333 München (DE)
(72) Erfinder: KURR, Klaus-Jürgen, D-64832 Babenhausen (DE); HOEHN, Wolfgang, D-65428 Rüsselsheim (DE)
(86) Internationale Anmeldenummer: PCT/EP2000/001711
(87) Internationale Veröffentlichungsnummer: WO 2000/053448

(56) Entgegenhaltungen:
- EP-A- 0 823 347
- EP-A- 0 839 682
- DE-A- 3 628 333
- DE-A- 4 031 242
- DE-A- 19 524 746
- DE-A- 19 626 249
- DE-A- 19 714 955

## Beschreibung

Die Erfindung betrifft eine Bedienvorrichtung, insbesondere in einem Fahrzeug, mit einer Betätigungstasten aufweisenden Eingabeeinheit.

Eine Bedienvorrichtung gemäß dem Oberbegriff des Anspruchs 1 ist aus der DE-A-36 28 333 bekannt.

Derartige Bedienvorrichtungen werden für elektrische Geräte häufig eingesetzt. Beispielsweise ist in heutigen Kraftfahrzeugen ein Einsatz von verschiedenen Geräten wie Radio, Telefon, Klimaanlage oder Navigationseinrichtung üblich. Die Bedienfelder dieser Geräte sind entsprechend ihrer am häufigsten benötigten Funktionen unterschiedlich aufgebaut. So haben zum Beispiel die Funktionstasten für die Lautstärke beim Radio besonders große Abmessungen und sind in einem zentralen Bereich des Bedienfeldes angeordnet. Eine Vielfalt von Geräten und eine hohe Anzahl der Funktionen dieser Geräte führt daher zu einer Unübersichtlichkeit der Bedienfelder. Somit ist eine Bedienung der Geräte erheblich erschwert.

Besonders nachteilig tritt die Unübersichtlichkeit bei Bedienvorrichtungen in Kraftfahrzeugen hervor, da auf diese Weise der Fahrzeugführer in seiner Aufmerksamkeit für das Verkehrsgeschehen in erheblicher Weise eingeschränkt werden kann.

Es ist bereits versucht worden, mittels weniger Funktionstasten sämtliche elektrische Geräte im Kraftfahrzeug zu bedienen, indem die Funktionen der Funktionstasten in sich aufgliedernde Menüs und Untermenüs gestaffelt worden sind. Die Funktionen der Funktionstasten ändern sich damit ständig mit dem Menü oder Untermenü. Daher muß ein Bediener jeweils die aktuelle Tastaturbelegung lesen oder sich diese bereits gemerkt haben, bevor er eine Funktionstaste betätigt. Eine solche Bedienvorrichtung ist daher nur zur Bedienung einigerwenigerbesonders häufig benötigter Funktionen geeignet. Ein weiterer Nachteil dieser Bedienvorrichtung ist, daß die Anzahl der Funktionstasten und deren Anordnung zwangsläufig in jedem Menü und Untermenü gleich ist und deshalb keine den Geräten entsprechende Anordnung der Funktionstasten ermöglicht wird. Eine den zu bedienenden Geräten unmittelbar zuordnenbare Anordnung der Funktionstasten ist jedoch für eine einfache, eine nur geringe Aufmerksamkeit verlangende Bedienung sehr hilfreich.

Um hier Abhilfe zu schaffen, ist es Aufgabe der vorliegenden Erfindung, eine Bedienvorrichtung der eingangs genannten Art so zu gestalten, daß eine einfache und übersichtliche Bedienung der Vorrichtung gewährleistet ist.

Diese Aufgabe wird erfindungsgemäß durch die Merkmale des Anspruchs 1 gelöst. Dabei sind die inaktiven Betätigungstasten auch völlig abgedunkelt und vor allem dann, wenn ein Black Panel Effekt genutzt wird, für den Bediener nicht sichtbar sein. Der Bediener wird somit nur mit Tasten konfrontiert, die für ihn zum jeweiligen Zeitpunkt aktiv schaltbar sind. Die Oberfläche der Bedienvorrichtung könnte in allen Betriebszuständen weitgehend eben sein. Weitere vorteilhafte Ausgestaltungen der Erfindung sind in den abhängigen Ansprüchen aufgeführt.

Für den Bediener sind lediglich die jeweils zur Bedienung erforderlichen Tasten aktiv schaltbar. Eine Ablenkung durch nicht erforderliche Tasten sowie eine mögliche Fehlbedienung sind auf diese Weise ausgeschlossen. Da auf der Bedienvorrichtung nur die Funktionstasten der ansteuerbaren Einrichtung, die mittels einer Auswahltaste angewählt worden ist, aktiv schaltbar sind, ist die erfindungsgemäße Bedienvorrichtung besonders gut und mit nur einem kurzen Blick erfaßbar. Dies ist insbesondere bei einer in einem Kraftfahrzeug angeordneten Bedienvorrichtung vorteilhaft, da hierbei der Fahrzeugführer nur unwesentlich vom Verkehrsgeschehen abgelenkt wird. Ein weiterer Vorteil der erfindungsgemäßen Bedienvorrichtung besteht darin, daß sie besonders wenig Platz benötigt. Hierdurch können beispielsweise sämtliche in einem Kraftfahrzeug angeordneten ansteuerbaren Einrichtungen von einer zentral positionierten, erfindungsgemäßen Bedienvorrichtung bedient werden. Da jeweils nur die momentan benötigten Funktionstasten aktiv schaltbar sind, wird eine Verwechslungsgefahr unterschiedlicher ansteuerbarer Einrichtungen zuverlässig vermieden.

Gemäß einer vorteilhaften Weiterbildung der Erfindung weisen die Betätigungstasten eine Regelungstaste zum Regeln einer Größe der ansteuerbaren Einrichtung auf. So kann mit der Bedienvorrichtung besonders einfach zum Beispiel auch die veränderbare Lautstärke eines Radios oder die veränderbare Temperatur einer Klimaanlage vom Bediener eingestellt werden. Dabei kann die Regelungstaste beispielsweise aus einer Tastenwippe oder zwei Einzeltasten für eine Zu-oder Abnahme der veränderbaren Größe oder aus einer einzigen Taste bestehen, deren Betätigung eine Zu-oder Abnahme der Größe bewirkt, wobei beim Erreichen eines Minimal- bzw. Maximalwertes dann auf den Maximal- bzw. Minimalwert gesprungen wird und auf diese Weise das gesamte Regelspektrum durchlaufbar ist.

Es ist denkbar, daß mit der Funktionstaste zum Beispiel ein festgelegter Ablauf in Gang gesetzt wird (wie zum Beispiel das Starten einer Wegsuche eines Navigationssystems), ein Gerät wie beispielsweise eine Heckscheibenheizung eingeschaltet wird oder ein Wert wie beispielsweise der von einem Bordcomputer berechnete Durchschnittsverbrauch des Fahrzeugs abgefragt wird. Von besonderem Vorteil ist es hingegen, wenn mit der Funktionstaste eine veränderbare Größe der ansteuerbaren Einrichtung auswählbar ist. Hierdurch wird - insbesondere wenn gemäß einer anderen vorteilhaften Weiterbildung der Erfindung die ausgewählte Größe mit der Regelungstaste regelbar ist - die Übersichtlichkeit der Bedienung weiter erhöht. Als besonders günstig erweist es sich, daß je nach betätigter Funktionstaste mittels der Regelungstaste unterschiedliche Größen verschiedener ansteuerbarer Einrichtungen einstellbar sind. Für die Bedienung sämtlicher Einrichtungen ist somit lediglich eine Regelungstaste erforderlich.

Gemäß einer anderen vorteilhaften Weiterbildung der Erfindung weisen die Betätigungstasten eine Umschalttaste und/oder eine Rückschalttaste auf. Unabhängig von der Schaltung einer Auswahl- und/oder Funktionstaste kann damit zum Beispiel vorgesehen sein, in einem Grundzustand der Bedienvorrichtung mit der Regelungstaste eine bestimmte Größe einerfestgelegten ansteuerbaren Einrichtung - beispielsweise die Lautstärke einer Audioanlage - regeln zu können. Die Umschalttaste dient dann dazu, die Regelung einer anderen Einrichtung in Abhängigkeitvon der Schaltung einer Funktionstaste und einer Auswahltaste zu erlauben. Eine Rückschalttaste (Reset-Taste) ist vorzugsweise vorgesehen, um die Bedienvorrichtung in einen vorgegebenen Grundzustand zurückversetzen zu können.

Man könnte sich vorstellen, die Betätigungstasten räumlich, zum Beispiel an der Oberfläche eines kugeligen Körpers, anzuordnen. Jedoch ist es besonders vorteilhaft, wenn die Betätigungstasten in einem Tastenfeld angeordnet sind. Durch eine solche in etwa ebene Anordnung der Tasten in Matrix-Form ist einerseits eine Abstützfläche für eine die Vorrichtung bedienende Hand geschaffen und andererseits eine gute Orientierung des Bedieners schon nach kurzer Eingewöhnungszeit sichergestellt, so daß die Bedienvorrichtung dann weitestgehend ohne Sichtkontakt mit dem Tastenfeld bedienbar ist. Da jeweils nicht benötigte Funktionstasten inaktiv (und nicht aktiv schaltbar) sind, stehtfürdie Hand eine große Abstützfläche zur Verfügung, ohne daß es zu Fehlbedienungen kommen kann.

Die das Tastenfeld aufweisende Abstützfläche kann der die erfindungsgemäße Vorrichtung bedienenden Hand - den Bediener entlastend - als Auflagefläche dienen, wenn gemäß einer anderen vorteilhaften Weiterbildung der Erfindung das Tastenfeld in etwa waagerecht angeordnet ist.

Vorzugsweise sind die Betätigungstasten Drucktasten, so daß durch eine haptische Rückmeldung die Bedienungssicherheit und die Bedienerfreundlichkeit der erfindungsgemäßen Vorrichtung weiter erhöht wird.

Eine weitgehend ebene und geschützte, Umwelteinflüssen wie Staub- und Feuchtigkeit widerstehende Oberfläche liegt vorteilhaft dann vor, wenn die Betätigungstasten eine Folientastatur bilden.

Besonders vorteilhaft ist auch eine Weiterbildung der Erfindung, bei der in dem ersten Betriebszustand die Regelungstaste und/oder die Umschalttaste und/oder die Rückschalttaste inaktiv und in dem zweiten Betriebszustand aktiv schaltbar ist. Damit sind im ersten Betriebszustand lediglich die zum Beginn einer Bedienung unerläßlichen Auswahltasten zur Bestimmung einer ansteuerbaren Einrichtung in jedem Fall aktiv schaltbar. In diesem Betriebszustand nicht notwendigerweise zu bedienende Tasten sind inaktiv, so daß Fehlbedienungen und Fehlfunktionen ausgeschlossen sind.

Es wäre zum Beispiel denkbar, vom ersten in den zweiten Betriebszustand mittels einer Spracheingabe durch den Bediener oder mittels einer separaten Taste zu wechseln. Jedoch ist vorteilhaft die Anzahl der Tasten der Bedienvorrichtung minimiert und die Zuverlässigkeit und Klarheit der erfindungsgemäßen Vorrichtung weiter erhöht, wenn der zweite Betriebszustand durch Schalten der Auswahltaste erreichbar ist. Somit werden automatisch mit der Auswahl der anzusteuernden Einrichtung durch ein Betätigen der entsprechenden Auswahltaste die zugehörigen Funktionstasten aktiv schaltbar.

Die Übersichtlichkeit der Bedienvorrichtung ist dann besonders hoch und die Ablenkung des Bedieners durch momentan nicht erforderliche Informationen sehr gering, wenn gemäß einer anderen vorteilhaften Weiterbildung der Erfindung im ersten Betriebszustand inaktive Betätigungstasten in diesem Betriebszustand nicht sichtbar sind.

Der Zustand der ansteuerbaren Einrichtungen ist entsprechend einer anderen Weiterbildung der Erfindung vorteilhaft gut darstellbar, wenn die Bedienvorrichtung einen Bildschirm aufweist. Dabei ist es von besonderem Vorteil, wenn auf dem Bildschirm eine Betätigung der Auswahltaste und/oder der Funktionstaste visualisierbarist. Der Bildschirm bringt somit Informationen zur Anzeige, mit deren Hilfe der Bediener eine weiter vereinfachte Bedienung der verschiedenen Einrichtungen vornehmen kann.

Wenn in vorteilhafter Weise auf dem Bildschirm der Ansteuerungszustand der mit der Auswahltaste bestimmten ansteuerbaren Einrichtung visualisierbar ist, erhält der Bediener zusätzliche, eine zielgerichtete Einstellung der Einrichtung wesentlich erleichternde Informationen.

Bei einer in einem Kraftfahrzeug vorgesehenen erfindungsgemäßen Bedienvorrichtung ist deren Betätigung besonders leicht, wenn vorteilhaft die Bedienvorrichtung in der Mittelkonsole oder in der Instrumententafel des Kraftfahrzeugs anordnenbar ist, so daß sich die Vorrichtung im unmittelbaren Zugriffsbereich des Fahrzeugführers befindet.

GrundsätzlichkanndieAn-undZuordnungder Auswahl- und Funktiontatasten der erfindungsgemäßen Bedienvorrichtung beliebig erfolgen. Insbesondere zum einfachen Erlernen der Tastenanordnung sowie für eine sichere Bedienung ist es jedoch von besonderem Vorteil, wenn gemäß einer anderen Weiterbildung der Erfindung mehrere, in einer in etwa horizontalen Zeile angeordnete Auswahltasten und mehrere, jeweils einer Auswahltaste zugeordnete und jeweils in einer in etwa vertikalen Spalte unter dieser Auswahltaste angeordnete Funktionstasten vorgesehen sind.

Die Bedienvorrichtung kann für beliebige, verschiedenartigste ansteuerbare Einrichtungen vorgesehen sein. Die große Übersichtlichkeit der Vorrichtung und einfache Bedienbarkeit kommt aber vor allem dann zur Geltung, wenn gemäß einer anderen vorteilhaften Weiterbildung der Erfindung jeweils eine Auswahltaste für die Bedienung einer Klimaanlage und/oder eines Bordrechners und/oder eines Verkehrstelematik-/Navigationssystems und/oder einer Audioanlage eines Kraftfahrzeugs vorgesehen ist.

Die Erfindung kann sehr unterschiedlich ausgeführt werden. Sie wird im folgenden anhand eines in den beigefügten Zeichnungen dargestellten Ausführungsbeispiels näher erläutert. Es zeigt:
- Figur 1: eine Eingabeeinheit mit einem Tastenfeld einer Bedienvorrichtung gemäß der Erfindung in schematisierter Ansicht,
- Figur 2: das Tastenfeld der Vorrichtung nach Figur 1 in einem anderen Betriebszustand und
- Figur 3: das Tastenfeld der Vorrichtung nach Figur 1 mit sämtlichen vorhandenen Tasten.

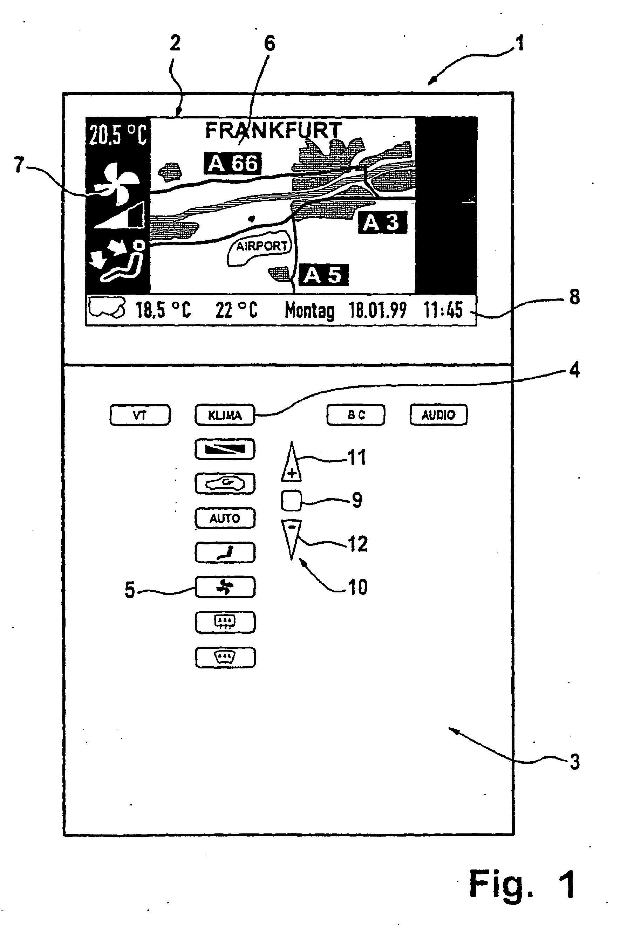

In Figur 1 ist eine Eingabeeinheit 1 einer Bedienvorrichtung, die weitere, hier nicht gezeigte Bauelemente wie ein Gehäuse und elektrische Kontaktierungsmittel aufweist, in schematisierter Ansicht dargestellt. Die Eingabeeinheit 1 ist in die nicht weiter dargestellte Mittelkonsole eines Kraftfahrzeugs eingebaut.

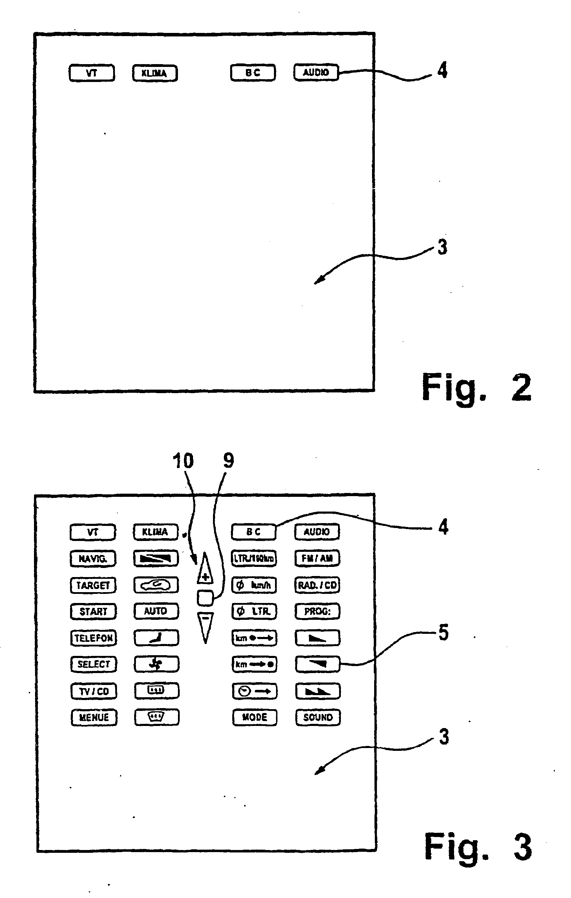

Im oberen Bereich der Eingabeeinheit 1 ist ein Bildschirm 2 und im unteren Bereich ein Tastenfeld 3 angeordnet. Das Tastenfeld 3 weist in einer oberen, horizontal angeordneten Zeile vier Auswahltasten 4 mit den jeweiligen Bezeichnungen "VT" zur Auswahl eines Verkehrstelematik-/Navigationssystems, "KLIMA" zur Auswahl einer Klimaanlage, "BC" zur Auswahl eines Bordrechners (Bordcomputer) und "AUDIO" zur Auswahl einer Audioanlage des Kraftfahrzeugs auf. Die jeweils ausgewählte Einrichtung ist mit der Bedienvorrichtung ansteuerbar. In einem ersten Betriebszustand der Bedienvorrichtung sind in dem Tastenfeld 3 lediglich die Auswahltasten 4 erkennbar (s. Figur 2). In einem hier dargestellten zweiten Betriebszustand, der durch das Schalten der Auswahltaste 4 mit der Bezeichnung "KLIMA" erreicht worden ist, sind in einer Spalte vertikal unter dieser Auswahltaste angeordnete Funktionstasten 5 zu erkennen, mit denen verschiedene Funktionen der Klimaanlage ansteuerbar sind. In der Reihenfolge von unten nach oben sind mit den Funktionstasten 5 eine Heckscheibenheizung, eine Frontscheibenheizung sowie ein Ventilator einschaltbar, die zu beaufschlagenden Luftausströmdüsen im Fahrzeug wählbar, eine Automatikfunktion und eine Umluftklappe einschaltbarsowie eine Temperaturregelung vornehmbar.

In etwa in der Mitte des Tastenfeldes 3 ist eine zwei Einzeltasten 11, 12 aufweisende Regelungstaste 10 erkennbar, mit der eine veränderbare Größe wie zum Beispiel die Innenraumtemperatur oder die Ventilatorstufe einstellbar ist. Zwischen den mit "+" und "-" gekennzeichneten Einzeltasten 11, 12 der Regelungstaste 10 ist eine Umschalttaste 9 angeordnet. Mit dieser Umschalttaste 9 kann die Zuordnung der Regelungstaste 10 zwischen einer vorgegebenen Funktion - zum Beispiel Lautstärkeregelung einer Audioanlage - und einer zweiten, durch die Funktionstasten 5 festgelegten Funktion geändert werden. So kann unabhängig davon, welche ansteuerbare Einrichtung mit der Bedienvorrichtung zu einem bestimmten Zeitpunkt bedient wird, immer auch die Lautstärke der Audioanlage geregelt werden, ohne daß durch eine Schaltung der entsprechenden Auswahl- und Funktionstaste diese Funktion separat aufgerufen werden muß.

Der oberhalb des Tastenfeldes 3 angeordnete Bildschirm 2 weist einen zentralen Bildschirmbereich 6 zur Wiedergabe eines Kartenausschnitts eines Navigationssystems sowie einen unteren, horizontalen Bildschirmbereich 8 zur Anzeige allgemeiner Informationen wie Datum, Uhrzeit, Innen- und Außentemperatur auf. Ein linker, vertikaler Bildschirmbereich 7 visualisiert die in dem Tastenfeld 3 vorgenommenen Eingaben sowie den Ansteuerungszustand der mit der Auswahltaste 4 bestimmten ansteuerbaren Einrichtung. So wird hier der momentane Betriebszustand der Klimaanlage angezeigt, da die Auswahltaste 4 mit der Bezeichnung "KLIMA" betätigt und die Klimaanlage bedienbar ist.

Das Tastenfeld 3 aus Figur 1 ist in Figur 2 in einem ersten Betriebszustand dargestellt, in dem lediglich die Auswahltasten 4 für einen Bediener erkennbar sind. Erst nach Anwahl einer dieser Auswahltasten 4 erscheinen die zugehörigen Funktionstasten 5 (s. Figur 1) und sind dann aktiv schaltbar. Gleiches giit für die Umschalttaste 9 und die Regelungstaste 10.

Das Tastenfeld 3 ist als Folientastatur ausgebildet, wobei die Betätigungstasten hintergrundbeleuchtbar sind. Beleuchtet sind dabei nur die jeweils aktiven Tasten. Die dem Bediener zugewandte Oberfläche der Folientastatur ist dunkelgrau eingefärbt, so daß unbeleuchtete Tasten nicht erkennbar sind und sich eine einheitliche, dunkelgraue Oberflächengestalt ergibt (Black Panel Effekt).

Sämtliche vorhandenen Tasten des Tastenfeldes 3 nach Figur 1 sind in Figur 3 dargestellt. Diese Figur dient lediglich der Veranschaulichung des gesamten Funktionsumfangs der Bedienvorrichtung, eine tatsächliche Darstellung sämtlicher Tasten gleichzeitig tritt hingegen in keinem Betriebszustand auf. Für den Bediener sind vielmehr nur die zum jeweiligen Zeitpunkt anwählbaren Tasten beleuchtet und sichtbar.

## Patentansprüche

1. Bedienvorrichtung, insbesondere in einem Fahrzeug, mit einer Betätigungstasten (4, 5, 9, 10) aufweisenden Eingabeeinheit, wobei die Betätigungstasten (4, 5, 9, 10) wenigstens eine Auswahltaste (4) zur Bestimmung einer mit der Bedienvorrichtung ansteuerbaren Einrichtung und wenigstens eine der Auswahltaste (4) zugeordnete Funktionstaste (5) zur Ansteuerung der ausgewählten Einrichtung umfassen und wobei in einem ersten Betriebszustand die Funktionstaste (5) inaktiv und in einem zweiten Betriebszustand die Funktionstaste (5) aktiv schaltbar ist, **dadurch gekennzeichnet , dass** im ersten Betriebszustand lediglich die Auswahltaste (4) beleuchtet ist, dass der zweite Betriebszustand durch das Schalten der Auswahltaste (4) erreicht wird und dass im zweiten Betriebszustand die wenigstens eine zu der Auswahltaste (4) gehörige Funktionstaste (5) beleuchtet ist.

2. Bedienvorrichtung nach Anspruch 1, **dadurch gekennzeichnet, daß** die Betätigungstasten (4, 5, 9, 10) eine Regelungstaste (10) zum Regeln einer Größe der ansteuerbaren Einrichtung aufweisen.

3. Bedienvorrichtung nach Anspruch 1 oder 2, **dadurch gekennzeichnet, daß** mit der Funktionstaste (5) eine veränderbare Größe der ansteuerbaren Einrichtung auswählbar ist.

4. Bedienvorrichtung nach Anspruch 2 und 3, **dadurch gekennzeichnet, daß** die ausgewählte Größe mit der Regelungstaste (10) regelbar ist.

5. Bedienvorrichtung nach einem der vorhergehenden Ansprüche, **dadurch gekennzeichnet, daß** die Betätigungstasten (4, 5, 9, 10) eine Umschalttaste (9) und/oder eine Rückschalttaste aufweisen.

6. Bedienvorrichtung nach einem der vorhergehenden Ansprüche, **dadurch gekennzeichnet, daß** die Betätigungstasten (4, 5, 9, 10) in einem Tastenfeld (3) angeordnet sind.

7. Bedienvorrichtung nach Anspruch 6, **dadurch gekennzeichnet, daß** das Tastenfeld (3) in etwa waagerecht angeordnet ist.

8. Bedienvorrichtung nach einem der vorhergehenden Ansprüche, **dadurch gekennzeichnet, daß** die Betätigungstasten (4, 5, 9, 10) Drucktasten sind.

9. Bedienvorrichtung nach einem der vorhergehenden Ansprüche, **dadurch gekennzeichnet, daß** die Betätigungstasten (4, 5, 9, 10) eine Folientastatur bilden.

10. Bedienvorrichtung nach einem der vorhergehenden Ansprüche, **dadurch gekennzeichnet, daß** in dem ersten Betriebszustand die Regelungstaste (10) und/oder die Umschalttaste (9) und/oder die Rückschalttaste inaktiv und in dem zweiten Betriebszustand aktiv schaltbar ist.

11. Bedienvorrichtung nach einem der vorhergehenden Ansprüche, **dadurch gekennzeichnet, daß** im ersten Betriebszustand inaktive Betätigungstasten (5, 9, 10) in diesem Betriebszustand nicht sichtbar sind.

12. Bedienvorrichtung nach einem der vorhergehenden Ansprüche, **dadurch gekennzeichnet, daß** die Bedienvorrichtung einen Bildschirm (2) aufweist.

13. Bedienvorrichtung nach Anspruch 12, **dadurch gekennzeichnet, daß** auf dem Bildschirm (2) eine Betätigung der Auswahltaste (4) und/oder der Funktionstaste (5) visualisierbar ist.

14. Bedienvorrichtung nach Anspruch 12 oder 13, **dadurch gekennzeichnet, daß** auf dem Bildschirm (2) der Ansteuerungszustand der mit der Auswahltaste (4) bestimmten ansteuerbaren Einrichtung visualisierbar ist.

15. Bedienvorrichtung nach einem der vorhergehenden Ansprüche, **dadurch gekennzeichnet, daß** die Bedienvorrichtung in der Mittelkonsole oder in der Instrumententafel eines Kraftfahrzeugs anordnenbar ist.

16. Bedienvorrichtung nach einem der vorhergehenden Ansprüche, **dadurch gekennzeichnet, daß** mehrere, in einer in etwa horizontalen Zeile angeordnete Auswahltasten (4) und mehrere, jeweils einer Auswahltaste (4) zugeordnete und jeweils in einer in etwa vertikalen Spalte unter dieser Auswahltaste (4) angeordnete Funktionstasten (5) vorgesehen sind.

17. Bedienvorrichtung nach einem der vorhergehenden Ansprüche, **dadurch gekennzeichnet, daß** jeweils eine Auswahltaste für die Bedienung einer Klimaanlage und/oder eines Bordrechners und/oder eines Verkehrstelematik-/Navigationssystems und/oder einer Audioanlage eines Kraftfahrzeugs vorgesehen ist.

## Claims

1. Control apparatus, in particular in a vehicle, having an input unit which has operating keys (4, 5, 9, 10), where the operating keys (4, 5, 9, 10) comprise at least one selection key (4) for defining a device which can be actuated by the control apparatus, and at least one function key (5), which is associated with the selection key (4), for actuating the selected device, in which case the function key (5) can be switched to be inactive in a first operating mode, and the function key (5) can be switched to be active in a second operating mode, **characterized in that** only the selection key (4) is illuminated in the first operating mode, **in that** the second operating mode is accessed by switching the selection key (4) and **in that** the at least one function key (5) associated with the selction key (4) is illuminated in the second operating mode.

2. Control apparatus according to Claim 1, **characterized in that** the operating keys (4, 5, 9, 10) have a control key (10) for controlling a variable of the device which can be actuated.

3. Control apparatus according to Claim 1 or 2, **characterized in that** a variable parameter for the device which can be actuated can be selected using the function key (5).

4. Control apparatus according to Claims 2 and 3, **characterized in that** the selected variable can be regulated using the control key (10).

5. Control apparatus according to one of the preceding claims, **characterized in that** the operating keys (4, 5, 9, 10) have a changeover key (9) and/or a reset key.

6. Control apparatus according to one of the preceding claims, **characterized in that** the operating keys (4, 5, 9, 10) are arranged in a keypad (3).

7. Control apparatus according to Claim 6, **characterized in that** the keypad (3) is arranged approximately horizontally.

8. Control apparatus according to one of the preceding claims, **characterized in that** the operating keys (4, 5, 9, 10) are pushbuttons.

9. Control apparatus according to one of the preceding claims, **characterized in that** the operating keys (4, 5, 9, 10) form a touch-sensitive keypad.

10. Control apparatus according to one of the preceding claims, **characterized in that** the control key (10) and/or the changeover key (9) and/or the reset key can be switched to be inactive in the first operating mode, and can be switched to be active in the second operating mode.

11. Control apparatus according to one of the preceding claims, **characterized in that** operating keys (5, 9, 10) which are inactive in the first operating mode cannot be seen in this operating mode.

12. Control apparatus according to one of the preceding claims, **characterized in that** the control apparatus has a display screen (2).

13. Control apparatus according to Claim 12, **characterized in that** operation of the selection key (4) and/or of the function key (5) can be displayed on the display screen (2).

14. Control apparatus according to Claim 12 or 13,
**characterized in that** the actuation state of the device which can be actuated and is defined by the selection key (4) can be displayed on the display screen (2).

15. Control apparatus according to one of the preceding claims, **characterized in that** the control apparatus can be arranged in the centre console or in the instrument panel of a motor vehicle.

16. Control apparatus according to one of the preceding claims, **characterized in that** a number of selection keys (4), which are arranged in an approximately horizontal row, and a number of function keys (5), which are each associated with a selection key (4) and are each arranged in an approximately vertical column under this selection key (4), are provided.

17. Control apparatus according to one of the preceding claims, **characterized in that** a selection key is in each case provided for control of an air-conditioning system and/or of a vehicle computer and/or of a traffic telematic/navigation system and/or of an audio system in a motor vehicle.

## Revendications

1. Dispositif de commande, en particulier dans un véhicule, comprenant une unité d'entrée présentant des touches de commande (4, 5, 9, 10), lesdites touches de commande (4, 5, 9, 10) comprenant au moins une touche de sélection (4) pour déterminer un dispositif commandable par le dispositif de commande et au moins une touche de fonction (5) assignée à la touche de sélection (4) pour commander le dispositif sélectionné et la touche de fonction (5) étant inactive dans un premier état de fonctionnement et à commande active dans un deuxième état de fonctionnement, **caractérisé en ce que**, dans le premier état de fonctionnement, seule la touche de sélection (4) est éclairée, **en ce que** le deuxième état de fonctionnement est accessible par commutation de la touche de sélection (4) et **en ce que**, dans le deuxième état de fonctionnement, l'au moins une touche de fonction (5) faisant partie de la touche de sélection (4) est éclairée.

2. Dispositif de commande selon la revendication 1,
**caractérisé en ce que** les touches de commande (4, 5, 9, 10) présentent une touche de réglage (10) pour le réglage d'une grandeur du dispositif commandable.

3. Dispositif de commande selon la revendication 1 ou 2, **caractérisé en ce qu'**une grandeur modifiable du dispositif commandable peut être sélectionnée par la touche de fonction (5).

4. Dispositif de commande selon la revendication 2 et 3, **caractérisé en ce que** la grandeur sélectionnée est réglable par la touche de réglage (10).

5. Dispositif de commande selon l'une des revendications précédentes, **caractérisé en ce que** les touches de commande (4, 5, 9, 10) présentent une touche de commutation (9) et/ou une touche de commande inverse.

6. Dispositif de commande selon l'une des revendications précédentes, **caractérisé en ce que** les touches de commande (4, 5, 9, 10) sont disposées dans un tableau de touches (3).

7. Dispositif de commande selon la revendication 6, **caractérisé en ce que** le tableau de touches (3) est sensiblement horizontal.

8. Dispositif de commande selon l'une des revendications précédentes, **caractérisé en ce que** les touches de commande (4, 5, 9, 10) sont des touches poussoirs.

9. Dispositif de commande selon l'une des revendications précédentes, **caractérisé en ce que** les touches de commande (4, 5, 9, 10) constituent un clavier à effleurement.

10. Dispositif de commande selon l'une des revendications précédentes, **caractérisé en ce que** la touche de réglage (10) et/ou la touche de commutation (9) et/ou la touche de commande inverse sont inactives dans le premier état de fonctionnement et **en ce qu'**elles sont à commande active dans le deuxième état de fonctionnement.

11. Dispositif de commande selon l'une des revendications précédentes, **caractérisé en ce que** les touches de commande (5, 9, 10) inactives dans le premier état de fonctionnement ne sont pas visibles dans ledit état de fonctionnement.

12. Dispositif de commande selon l'une des revendications précédentes, **caractérisé en ce que** le dispositif de commande présente un écran (2).

13. Dispositif de commande selon la revendication 12,
**caractérisé en ce qu'**un actionnement de la touche de sélection (4) et/ou de la touche de fonction (5) peut être visualisé à l'écran (2).

14. Dispositif de commande selon la revendication 12 ou 13, **caractérisé en ce que** l'état de commande du dispositif commandable déterminé par la touche de sélection (4) peut être visualisé à l'écran (2).

15. Dispositif de commande selon l'une des revendications précédentes, **caractérisé en ce que** le dispositif de commande peut être placé dans la console centrale ou le tableau de bord d'un véhicule.

16. Dispositif de commande selon l'une des revendications précédentes, **caractérisé en ce que** sont prévues plusieurs touches de sélection (4) disposées sur une ligne sensiblement horizontale et plusieurs touches de fonction (5) assignées chacune à une touche de sélection (4) et disposées en colonne sensiblement verticale en dessous de la touche de sélection (4) à laquelle elles sont chacune assignées.

17. Dispositif de commande selon l'une des revendications précédentes, **caractérisé en ce qu'**est prévue dans chaque cas une touche de sélection pour la commande d'une installation de conditionnement d'air et/ou d'un ordinateur de bord et/ou d'un système de navigation et de télématique routière et/ou d'une installation audio d'un véhicule.
